Europäisches Patentamt

European Patent Office

Office européen des brevets

(19)

(11) Publication number: **0 402 938**
**A1**

## (12) EUROPEAN PATENT APPLICATION

(21) Application number: **90111343.1**

(22) Date of filing: **15.06.90**

(51) Int. Cl.5: **B60R 25/02**

(30) Priority: **16.06.89 BR 8903126**

(43) Date of publication of application:
**19.12.90 Bulletin 90/51**

(84) Designated Contracting States:
**DE ES IT**

(71) Applicant: **Haddock Lobo, Roberto Jorge**
**Rua Ararapira 58, apt. 84**
**Sao Paulo(BR)**

(72) Inventor: **Haddock Lobo, Roberto Jorge**
**Rua Ararapira 58, apt. 84**
**Sao Paulo(BR)**

(74) Representative: **Buzzi, Franco et al**
**c/o Jacobacci-Casetta & Perani S.p.A. Via**
**Alfieri, 17**
**I-10121 Torino(IT)**

(54) **A steering wheel with protection against stealing vehicles.**

(57) A steering wheel with protection against stealing vehicles formed by the usual steering wheel (1, 2) assembled in the steering axle (3) and which, in between an assembling and disassembling dispositive (4, 5, 6) acts, operated by the driver and which is able to take the steering wheel to a normal position, in which it transmits rotation to the steering axle (3), when turned, and which is connected in the axial and radial sense to the steering wheel (3), but it does not transmit rotation to this when it is turned.

FIG. 2

The present patent has as object a steering wheel with protection against stealing vehicles, belonging to the field of automobilism industry which was developed to give the steering wheel two positions; to know, a normal position in which the steering wheel transmits rotation to the steering axle when turned over and a free alternative position, in which the referred steering wheel is connected to the axial and radial sense to the steering axle, but it does not transmit rotation to this when turned down.

A great deal of dispositives designed to avoid the stealing of automotor vehicle, among them, the fetter steering wheel dispositives, which after taking the key out of the contact, do not allow the turning of the steering wheel, making it impossible to conduct the vehicle and consequently its moving through normal conditions by those who do not have the vehicle's key.

In spite of the large utilisation of these usual fetter dispositives, they are not very satisfactory, due to the fact that they are usually not very resistant and, if they are forced, they break easily, making it possible to conduct the vehicle even if one does not have the ignition key.

Another dispositive of the above mentioned kind is formed by a fetter which ties the steering wheel to the brake pedal of the vehicle. The inconvenient in this case is that the steering wheel can be disassembled from the steering axle, and the fetter dispositive can be taken out and the steering wheel can be assembled again by a non authorised person and this operation can be done very easily.

Dispositives like chains and steel rope are also known, they work out with a padlock and are tied to a fixed part of the vehicle. These dispositives present as inconvenience the fact that they may be cut or sawed easily and still present a not very pleasant dealing for the user.

Taking these inconveniences in consideration and in order to get them over, the steering wheel with protection against stealing vehicles was developed, being the object of the present patent, which is essentially formed by the usual steering wheel, assembled in the steering axle and in between there is a dispositive of box coupling or a non box coupling dispositive of turning between the parts operated by the motorist of the vehicle providing the steering two positions, be it known, a normal one which transmits rotation to the steering axle when turned over and a free position, in which said steering wheel is connected in the axial and radial sense, to the steering axle, but it does not transmit rotation to this when turned over.

This form of constructing the steering wheel solves the already mentioned inconveniences with the usual dispositives, once it impedes the action of the one who intends to steal the vehicle, because this person has no way to force the steering wheel to put it in normal conditions to be used, once it turns, free in relation to the steering wheel and even if it damages the piece it will be harder to make the vehicle start.

On the other hand it is not possible to substitute the steering wheel, already invented by another one, once it belongs to the same dispositive designed to impede the access to the means of fixing the steering wheel axle, when the steering wheel is set into the free position, which only allows the disassembling of the corresponding steering wheel, when the whole set is presented in its normal position.

The enclosed drawings show a very illustrated and not restrictive title a possibility of constructing the steering wheel against stealing vehicles, being the object of the present patent, in which:

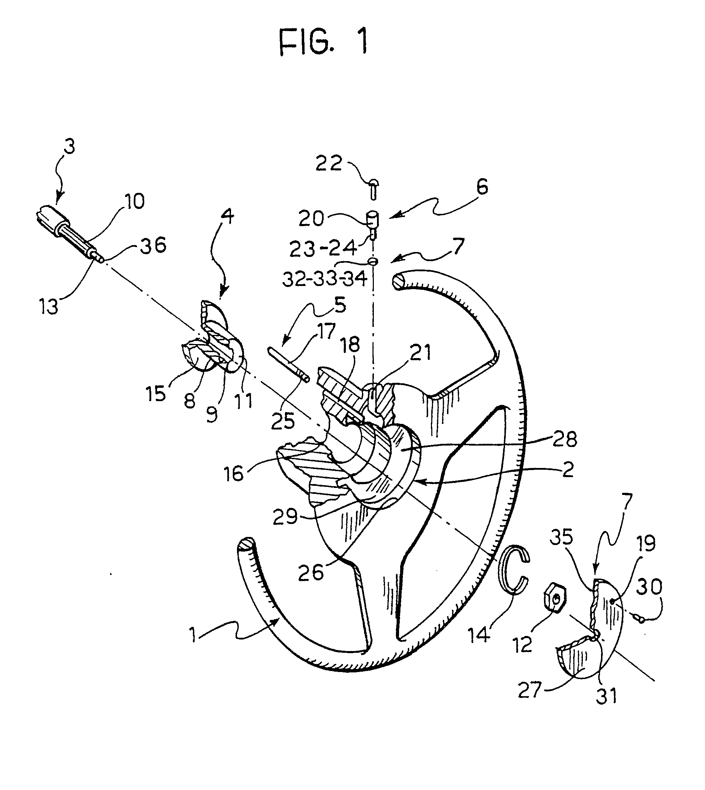

figure 1 shows the steering wheel in perspective, with its parts taken separately and with partial cuts:

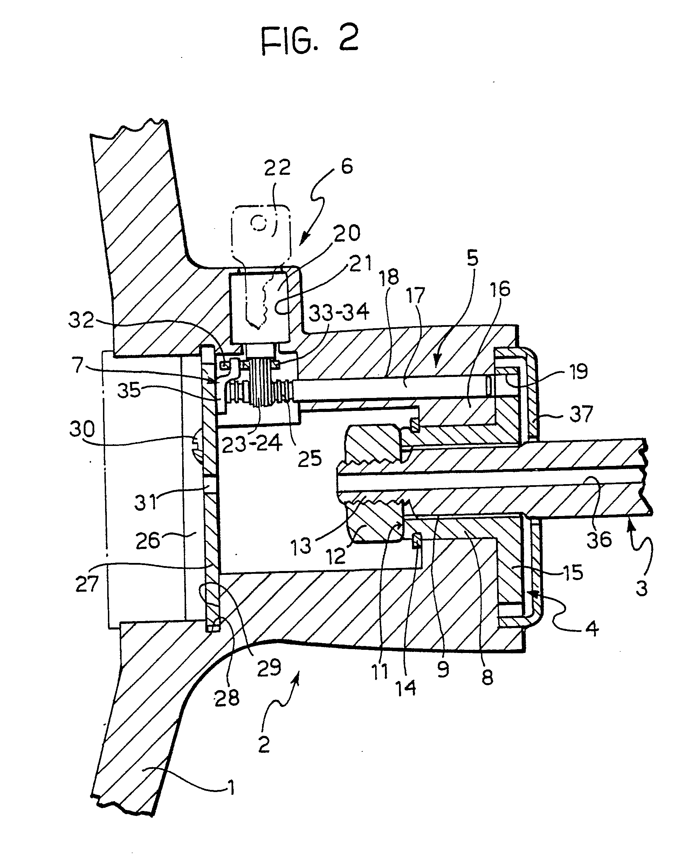

figure 2 shows it laterally cut and in the free position, in which the steering wheel does not transmit rotation to the steering axle when turned over; and

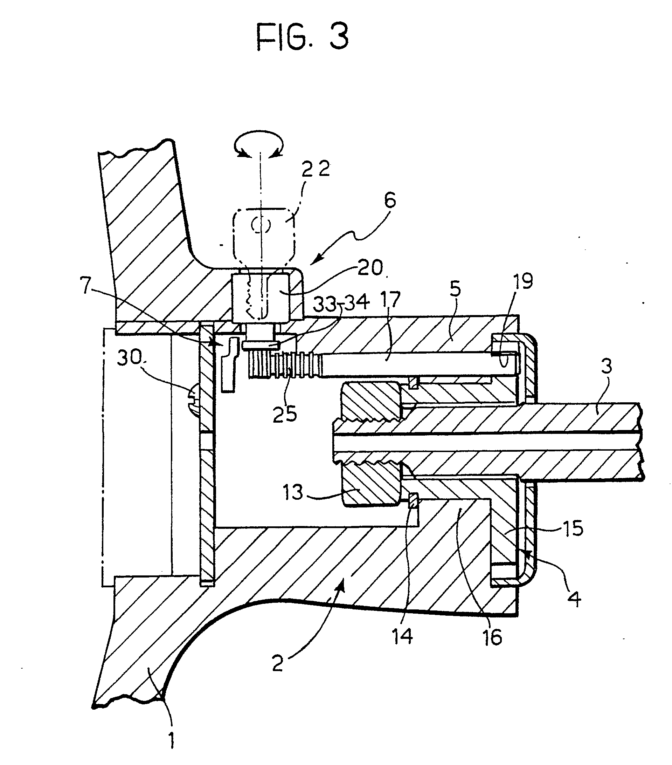

figure 3 shows the same anterior figure, but in its normal position, in which the steering wheel transmits rotation to the steering axle, when turned over.

According to what is shown on the above referred figures, the steering wheel with protection against stealing vehicles, being the object of the present patent is essentially formed by the steering wheel itself, (1, 2), formed by a wheel ring (1) in which the motorist acts and which has a central cube (2) assembled in the steering axle (3) of the vehicle, connected to the steering mechanism (not illustrated) at the present invention, said steering wheel (1, 2) is not permanently held, in the axial and radial sense of the steering wheel (3) it is gyratory assembled or disassembled in the steering axle (3) through an assembling or disassembling dispositive (4, 5, 6), operable by the motorist and formed by a fixed part (4), assembled in the steering wheel (3) and on which it is assembled free, depending on the position of said assembling or disassembling dispositive (4, 5, 6), the steering wheel (1, 2) and the moving part (5), assembled in the cube (2) of the steering wheel (1, 2) and subjected to being a component of command (b), operable by the motorist, moving part (5) this may be assembled or disassembled in said fixed part (4) of the steering wheel (3).

The steering wheel, this way constructed, has a normal position, in which the assembling and disassembling dispositive (4, 5, 6) is in a position which unites the steering wheel (1, 2) with the steering axle (3), appropriate for the conduction of the vehicle and a free position, in which, on the contrary, the assembling and disassembling dispositive (4, 5, 6) this in a not united position with the steering wheel (1, 2) of the steering axle (3), not appropriate for the conduction of the vehicle and in which said steering wheel (1, 2) is held axially and radially to the steering axle (3), but it turns free in relation to said steering axle (3), making it impossible for someone who is not authorized to conduct the vehicle.

Yet, is a part of the steering wheel with protection against stealing vehicles, a dispositive (7) which impedes the access through the means of fixing the steering wheel (1, 2) to the steering axle (3), when the assembling and disassembling dispositive (4, 5, 6) is in the position that disassembles the steering wheel (1, 2) from the steering axle, that is, when the steering wheel is in its free position, in order to impede the said steering wheel (1, 2) to be changed by another steering wheel.

In a possible form of constructing the steering wheel with protection against the stealing vehicles, as shown on the above figures, the fixed part (4), of the assembling and disassembling dispositive (4, 5, 6) is formed by a rotation transmitting glove (8), intercoupling between the cube (2) of the steering wheel (1, 2) and the steering axle (3), provided with internal teeth (9), which are intercoupling with the corresponding external teeth (10) on the steering axle's extremity (3) providing the fixing between both pieces, said glove has an extremity (11) turned to the interior of the cube (2) and which meets a female screw (12) that is pressed, twisted in smaller diameter extreme piece and twisted (13) from the steering axle (3), and near the said internal extremity (11) of the rotation transmitting glove (8) is expected an external elastic ring (14) and in the external opposite extremity of said glove is expected a flange (15) while the opposite extremity is exposed to the component of command (6).

The component of command (6) is formed by a radial lock drum (20) assembled in the corresponding radial side (21) of the cube (2) of the steering wheel (1, 2), whose extremity turned externally expects an opening for introducing the key (22) and from the opposite extremity bulge a gyratory axle (23) provided with teeth (24) which are assembled to an external piece in the form of a cogwheel (25) of the locking pin (17), this set is able to transform the rotation movement of the locking drum (20) in a translation movement for the locking pin (17), in order to make it go in and out of the eccentric opening (19) of the flange (15), respectively, to assemble or disassemble steering wheel (1, 2) from the steering axle (3), configuring the normal or free position of the steering wheel.

On the tube (2) extremity exposed to that from which bulge the steering wheel (3) is expected the place for the horns (26), whose button is defined by a circular plaque (27) whose edge is assembled and connected in a corresponding internal groove of the cube (28), the region of said plaque, next to said edge, is on an internal degree (29) of said cube, where it is fixed through a screw (30) and in the centre of said button plaque (27) is expected an opening (31) for the wires of the horns.

The dispositive (7) which impedes the access to the means of fixing the steering wheel (1, 2) to the steering axle (3) is formed by said button plaque (27) and a fetter hook (32) whose one of the extremities has an enlargement (33) with a striated hole (34) which is fixedly assembled in the locking drum (20) axle (31) and the opposite extremity is engaged in a corresponding hook (35) assembled inside the button plaque (27) of the place for the horns (26). When the assembling and disassembling dispositive (4, 5), 6) is led to the position which sets the steering wheel (1, 2) free from the steering axle (3), that is, free from the position of the steering wheel.

Therefore, when is its normal position, the steering wheel (1, 2) when turned by the motorist, transmits rotation to the steering axle (3) and this one to the steering mechanism (not illustrated), the coupling pin (17) is presented in a projected position, in which is exposed in the interior of the flange (15) orifice (19) of the turning transmission glove (8).

On the other hand, to lead the steering wheel (1, 2) to its free position, in which the steering wheel (1, 2) does not transmit rotation to the steering axle (3) when turned over and makes the locking drum (20) turn with the help from the key (22), when its axle (23) pools the fetter pin (17) through the extreme cogwheel (25) of this, to a gathered position, in which said fetter pin (17) is out of the flange's (15) opening (19) of the rotation transmission glove (8), when the steering wheel (1, 2) does not transmit rotation to the steering axle (3) when turned over, and at the same time that the fetter hook (32) of the dispositive (7) which impedes the access to the means of fixing the steering wheel to the steering axle, is engaged in the hook (35) inside the button plaque (27) of the place for horns (26), impeding this way, that said steering wheel may be changed by someone whose tries to possess the vehicle improperly.

The cube (2) extremity of which bulges the steering axle (3) is locked with a cover (37).

Naturally, inside the basic concept of the steering wheel with prevention against the stealing vehicles, as described above, several variations can be expected, without running out of the concept of the invention.

Therefore in a possibility of variation, the movable part (5) of the assembling and disassembling dispositive (4, 5, 6) can be formed by a cogged ring assembled in the steering wheel (1, 2) or in the steering axle (3) and coupling in expected corresponding cog, respectively, in the steering axle (3) or the steering wheel (1, 2), this cogged ring moves through the component of command (6), between the engaging and disengaging positions.

In another way of constructing the steering wheel, the movable part (5) can be formed by the eccentric or fetter hook which are turned by the component of the command (6) between the locking and unlocking positions in relation to a groove or others.

Other kinds of constructions could be concepted for the movable part (5) of the assembling and disassembling dispositive (4, 5, 6) disassembled through a longitudinal movement, parallel to the axle of the set, as it occurs to the fetter pin (17), disassembled in radial, transversal, oblique or other directions or according to a rotation movement around itself or others which best fit each necessity.

On the other hand, the component of command (b) instead of being formed by the locking dispositive (20), described above, can also be constituted by a solenoid, fed with the vehicle's electric energy, supposed to an appropriate button or to the vehicle's key, when started it makes the movable part (5) of the assembling and disassembling dispositive (4, 5, 6) move between the positions.

In another possibility of constructing, the component of command (6) can be formed by an electric engine, which acts on the movable part (5) of the assembling and disassembling dispositive (4, 5, 6).

The component of command (6) in the solenoid version of electric engine, can be started electronically by a board computer or by the alarm system of the vehicle or yet by an electric remote transmitter.

In another possibility of constructing the component of command (6) it can be formed by a piston or a diaphragm supposed to the pressure of a fluid difference, that can be, air, water or oil. Given from a pump or a compressor assembled in the vehicle or in the vacuum of the vehicle's feeding system, commanded from a manual or electric valve, which is operated by the motorist.

All electric wiring and/or fluid tubulation or others which are a part of the component of command (6), come to its part, incorporated in the steering wheel, through an internal conductor (36) of the steering axle (3).

Naturally, independently on the kind of construction of the assembling and disassembling dispositive (4, 5, 6) the fixed (4) and movable (5) parts, instead of being respectively exposed, as said above, to the steering axle (3) and to the steering wheel (1, 2), can be contrary exposed, that is, the fixed part (4) assembled in the steering wheel (1, 2) and the movable one (5) in the steering axle (3), in a better way as to assist each case.

Also independently of the adopted kind of constructing the set, there can be expected an electric interruptor (not illustrated) started by the component of command (6), connected in a series to the vehicle's ignition key and arranged in a way as to cut the electric current when the steering wheel is in its free (stopped) configuration, that is, that position which the steering wheel (1, 2) does not transmit rotation to the steering axle (3) and it transmits current when the steering wheel is in its normal position, that is, that position when the steering wheel (1, 2) transmits rotation to the steering axle (3), when it is turned, in a way that the steering wheel, as concepted in the present invention, besides making it more difficult or avoiding the stealing of a vehicle, also avoids that the owner or user, by an act of distraction, may put the vehicle moving without taking the steering wheel to its normal position.

## Claims

1. A steering wheel with protection against stealing vehicles formed by a steering wheel itself, formed by a ring, on which the motorist acts and which has a central cube incorporated, assembled in a steering axle, connected to the vehicle's steering mechanism, characterised by the fact that said steering wheel has a normal position, in which, the steering wheel (1, 2) itself, when turned, transmits rotation to the steering axle (3), and alternatively, a free position, in which the steering wheel (1, 2) itself is axial and radially connected to the steering axle (3), but when it is turned, it does not transmit rotation to the steering wheel (3), as for what the referred steering wheel is formed by sets A and B, set A, formed by a steering axle (3) and a fixed part (4) of an assembling and disassembling dispositive (4, 5, 6), the fixed part (4) is assembled in the axial, radial and rotational sense, in said steering wheel (3) and set B, formed by the steering wheel itself (1, 2) having the component of command (6) of the assembling and disassembling dispositive (4, 5, 6) assembled, and operated by the motorist; said sets A and B are permanently interconnected in the axial and radial senses, through the usual means of connecting the steering wheel (1, 2) to the steering axle (3), but optionally interconnected in the rotational sense through a movable piece (5) of the assembling disassembling dispositive (4, 5, 6), supposed to the component of command (6) and coupling or not coupling of the fixed part (4) of the assembling and disassembling dispositive (4, 5, 6), to lead the steering wheel respectively to the normal and free positions and being expected a dispositive (7), to impede the access to the usual means of interconnection from the steering wheel (1, 2) to the steering axle (3) when the steering wheel is in its free position.

2. A steering wheel with protection against stealing vehicles as claimed in (1) characterised by the fact that in a mechanic construction the component of command (6) is formed by a locking dispositive (20).

3. A steering wheel with protection against stealing vehicles as claimed in (1) characterised by the fact that the component of command (6) is a combination button.

4. A steering wheel with protection against stealing vehicles as claimed in (1) characterised by the fact that the component of command (6) is formed by a solenoid, fed through the vehicle's battery energy and started by a button, placed any where inside the vehicle or by the vehicle's ignition key.

5. A steering wheel with protection against stealing vehicles as claimed in (1) characterised by the fact that the component of command (6) is formed by an electric engine, fed through the vehicle's battery energy and started by a button or the vehicle's ignition key.

6. A steering wheel with protection against stealing vehicles as claimed in (4) or (5) characterised by the fact that the solenoid or electric engine are started electronically by the board computer or the vehicle's alarm system.

7. A steering wheel with protection against stealing vehicles as claimed in (4) or (5) characterised by the fact that the solenoid or electric engine are started by a signal sent through a remote electronic transmitter.

8. A steering wheel with protection against stealing vehicles as claimed in (1) characterised by the fact that the component of command (6) is formed by a piston or diaphragm stared by fluid pressure differences (water or air or oil), given by a pump or compressor assembled in the vehicle or by the feeding system vacuum of the same and also being expected a mechanical or electrical valve of the set command.

9. A steering wheel with protection against stealing vehicles as claimed in (8) or (7) or (6) characterised by the fact of using the central orifice (36) of the steering axle (3) for conducting the electric wires and/or fluid tubes, which interconnect the component of command (6) to the parts of the set.

10. A steering wheel with protection against stealing vehicles as claimed in (1) characterised by the fact that the movable part (5) move according to a translation movement.

11. A steering wheel with protection against stealing vehicles as claimed in (1) characterised by the fact that the movable part (5) move according to a rotation movement.

12. A steering wheel with protection against stealing vehicles as claimed in (1) characterised by the fact that the movable part (5) move longitudinally and parallely around the steering axle (3) of the vehicle.

13. A steering wheel with protection against stealing vehicles as claimed in (1) characterised by the fact that the movable part (5) move any direction in relation to the steering wheel (3), be it known, radial, transversal, slopped or others.

14. A steering wheel with protection against stealing vehicles as claimed in (12) or (13) characterised by the fact that the movable part (5) is formed by a locking pin (17), which slips on a hole (18) in set B, lined to a hole (19) expected in set A and which slips in said A and B sets connecting or disconnecting them.

15. A steering wheel with protection against stealing vehicles as claimed in (12) characterised by the fact that the movable part (5) is a cogged ring, that moves in between sets A and B, which as similar cogs lined to the said ring's cogs, which can connect or disconnect referred sets A and B: said ring's cogs and sets can be placed internal or externally or in both situation.

16. A steering wheel with protection against stealing vehicles as claimed in (11) characterised by the fact that the moveable part (5) is formed by an eccentric situated in one of A or B sets, which, when turned, a part of it enters in a groove situated in the other set, connecting or disconnecting said sets A and B.

17. A steering wheel with protection against stealing vehicles as claimed in (11) characterised by the fact that the movable part (5) is formed by a fetter hook situated in one of A and B sets which, when turned assembles an assembling element situated in the other set.

18. A steering wheel with protection against stealing vehicles as claimed in any above mentioned claims characterised by the fact that the component of command (6) is arranged from the movable part (5).

19. A steering wheel with protection against stealing vehicles as claimed in any above mentioned claims characterised by the fact that the component of command (6) is disarranged from the movable part (5).

20. A steering wheel with protection against stealing vehicles as claimed in (18) characterised by the fact that when the component of command (6) has a gyratory movement and the movable part (5) has a linear movement or vice-versa the conversion of movement between said elements is made by usual dispositives of conversion of movements, such as the kind of screw thread or cam.

21. A steering wheel with protection against stealing vehicles as claimed in (19) characterised by the fact that when the component of command (6) has a gyratory movement and the movable part (5) has a linear movement or vice-versa the conversion of movement between said elements is made by usual dispositives of conversion of movements, such as conical cogwheels, pinion/rack, lever, helicoidal, cogwheel and eccentric.

22. A steering wheel with protection against stealing vehicles as claimed in any one of the above mentioned claims characterised by the fact that the component of command (6) can be placed in set A or B of the steering wheel.

23. A steering wheel with protection against stealing vehicles as claimed in (1) characterised by the fact that the dispositive (7) impedes the access to the means of connecting the steering wheel (1, 2) to the steering axle (3), be formed by a button cover (27) which closed the place for the horns (26) of the cube (2) of the steering wheel (1, 2) and a fetter hook (32), of whose one extremity is supposed to the component of command (6), and the opposite extremity engages in a corresponding hook (35), assembled in the internal part of the button cover (27), when the assembling and disassembling dispositive (4, 5, 6) is taken to the position which frees the steering wheel (1, 2) from the steering axle (3), that is, when the steering wheel is taken to its free position.

24. A steering wheel with protection against stealing vehicles as claimed in any above mentioned claims characterised by, in a mechanical construction version the assembling and disassembling dispositive (4, 5, 6) has the fixed part (4) formed by a rotation transmission glove (8), interconnected between the cube (2) of the steering wheel (1, 2) and the steering axle (3), with internal longitudinal cogs (9) interconnected to longitudinal cogs (10) of the steering axle (3); said glove (8) has the extremity (11) turned to the interior of the cube (1), against which it gets pressed by the wiring (12), screwed in a screwed extremity (13) of the steering axle (3), next to said internal extremity, referred glove has an elastic ring (14) and in the opposite extremity of a flange (15), between them, a piece of minor diameter (16) is pressed inside the cube (2); the movable part (5) of said locking dispositive (4, 5, 6) is formed by a locking pin (17), parallel to the set's axle, slippery placed in an eccentric set (18) of the cube (2) of the steering wheel (1, 2) and which one of the extremities can be assembled of disassembled from the eccentric opening (19) of the flange (15), while the opposite extremity is supposed to the component of command (6), formed by a locking drum (20) radially assembled in the cube (2), whose one extremity is turned to the outside and expects a receiving key opening (22) and the opposite extremity has a gyratory axle longitudinally grooved (23, 24), assembled in a cogwheel (25), incorporated on the fetter pin extremity (17), opposite to that one which is assembled or disassembled to the opening (19).

25. A steering wheel with protection against stealing vehicles as any one of the above mentioned claims characterised by possessing and electrical interruptor, started by the component of command (6), connected in a series with the vehicle's ignition key and arranged as to cut the electric current - to the ignition key, - when the steering wheel is taken to the free position and to transmit electric current to the ignition key when the steering wheel is taken to its normal position.

FIG. 1

# FIG. 2

# FIG. 3

# EUROPEAN SEARCH REPORT

| DOCUMENTS CONSIDERED TO BE RELEVANT | | EP 90111343.1 |
|---|---|---|

| Category | Citation of document with indication, where appropriate, of relevant passages | Relevant to claim | CLASSIFICATION OF THE APPLICATION (Int Cl⁵) |
|---|---|---|---|
| X | <u>US - A - 1 539 495</u> (LAMBERT) * Totality * | 1,2, 10,20, 21 | B 60 R 25/02 |
| Y | | 4,6,7 | |
| X | <u>US - A - 1 516 418</u> (WOODWARD) * Fig. * | 1,11 | |
| X | <u>US - A - 1 504 214</u> (CIPRIANO) * Totality * | 1,3 | |
| X | <u>US - A - 1 549 568</u> (BATES) * Fig. * | 1,13, 15,16, 22 | |
| X | <u>US - A - 1 532 009</u> (WESTAWAY) * Fig. * | 1,13, 16,22 | |
| X | <u>DE - C - 728 914</u> (NEWIGER) * Fig. * | 1,13 | TECHNICAL FIELDS SEARCHED (Int Cl⁵) B 60 R |
| X | <u>FR - A1 - 2 575 713</u> (BERTRAND) | 1 | |
| A | | 23 | |
| X | <u>FR - A1 - 2 569 147</u> (CONSTARATAS) | 1 | |
| Y | <u>US - A - 3 827 526</u> (SMITH) * Totality * | 4,6 | |
| Y | <u>EP - A2/A3 - 0 158 354</u> (NISSAN) | 7 | |

The present search report has been drawn up for all claims

| Place of search VIENNA | Date of completion of the search 07-09-1990 | Examiner PANGRATZ |
|---|---|---|

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int Cl⁵) |
| | * Totality * | | |
| | | | **TECHNICAL FIELDS SEARCHED (Int Cl⁵)** |
| | The present search report has been drawn up for all claims | | |

| Place of search | Date of completion of the search | Examiner |
|---|---|---|
| VIENNA | 07-09-1990 | PANGRATZ |

-2-